# EUROPEAN PATENT APPLICATION

(11) **EP 4 745 477 A1**
(43) Date of publication of application: **20.05.2026**
(21) Application number: 24857616.7
(22) Date of filing: 31.01.2024
(51) Int. Cl.: F24F 11/64, F24F 11/80, F24F 110/10

(54) **AIR CONDITIONER CONTROL METHOD AND APPARATUS, AND AIR CONDITIONER AND STORAGE MEDIUM**

(30) Priority: 25.08.2023 CN 202311086693
(71) Applicant: GD Midea Air-Conditioning Equipment Co., Ltd., Foshan, Guangdong 528311 (CN)
(72) Inventor: FAN, Qifeng, Foshan, Guangdong 528311 (CN); TANG, Shanxuan, Foshan, Guangdong 528311 (CN); LIU, Pu, Foshan, Guangdong 528311 (CN); PANG, Min, Foshan, Guangdong 528311 (CN); WANG, Shaohua, Foshan, Guangdong 528311 (CN); LIU, Ming, Foshan, Guangdong 528311 (CN)
(74) Representative: RGTH
(86) International application number: PCT/CN2024/074993
(87) International publication number: WO 2025/044059

(57) **Abstract**

A control method includes: (S10) predicting compensation temperatures corresponding to operating parameter combinations of an air conditioner for a next moment based on current environmental characteristics and the operating parameter combinations; (S20) determining perceived temperatures each corresponding to one of the operating parameter combinations based on a return air temperature and the compensation temperatures; (S30) determining a target operating parameter combination based on a set temperature and the perceived temperatures, and controlling an operation of the air conditioner based on the target operating parameter combination.

## Description

### CROSS-REFERENCE TO RELATED APPLICATIONS

The present application claims priority to Chinese Patent Application No. 202311086693.6, filed on August 25, 2023, the entire contents of which are incorporated herein by reference.

### TECHNICAL FIELD

The present application relates to the technical field of air conditioners, and in particular to a method and a device for controlling an air conditioner, an air conditioner and a storage medium.

### BACKGROUND

Due to the influence of factors such as installation location and air flow status, during the cooling/heating process of an air conditioner, there is a discrepancy between the return air temperature of the air conditioner and the perceived temperature in the room.

In the related art, the process of the air conditioner adjusting the indoor temperature mainly relies on the return air temperature collected by the air conditioner, and the air conditioner is controlled based on the return air temperature. When there is an inconsistency between the return air temperature collected by the air conditioner and the perceived temperature in the room, the air conditioner cannot accurately adjust the indoor temperature to the target temperature set by the user.

### SUMMARY

The main purpose of the present application is to provide a method and a device for controlling an air conditioner, an air conditioner, and a storage medium, aiming to solve the technical problem in the related art that there is a certain discrepancy between the return air temperature and the indoor perceived temperature, and the air conditioner cannot accurately adjust the indoor temperature when regulated based on the return air temperature.

To achieve the above purpose, the present application provides a method for controlling an air conditioner, comprising the following steps:
predicting a compensation temperature of operating parameter combinations at a next moment based on environmental characteristics at a current moment and operating parameter combinations of an air conditioner;
determining a perceived temperature corresponding to each of the operating parameter combinations based on a return air temperature and the compensation temperature; and
determining a target operating parameter combination based on a set temperature and the perceived temperature, and controlling an operation of the air conditioner based on the target operating parameter combination.

In an embodiment, before predicting the compensation temperatures of the operating parameter combinations at the next moment based on the environmental characteristics at the current moment and the operating parameter combinations of the air conditioner, the method further comprises:
inputting the environmental characteristics at the current moment and operating parameter combinations of the air conditioner into a return air temperature prediction model to predict the return air temperature of the operating parameter combinations at the next moment; and
the step of predicting the compensation temperatures of the operating parameter combinations at the next moment based on the environmental characteristics at the current moment and the operating parameter combinations of the air conditioner comprises:
inputting the environmental characteristics at the current moment and operating parameter combinations of the air conditioner into a compensation temperature prediction model to predict the compensation temperatures of the operating parameter combinations at the next moment.

In an embodiment, before inputting the environmental characteristics at the current moment and operating parameter combinations of the air conditioner into the compensation temperature prediction model to predict the compensation temperatures of the operating parameter combinations at the next moment, the method further comprises:
collecting environmental and operating data within each time cycle;
traversing the environmental and operating data within each time cycle, and extracting return air characteristics of a current time cycle and a return air temperature of a next time cycle; and
training the return air temperature prediction model through the return air characteristics of the current time cycle as independent variables and the return air temperature of the next time cycle as dependent variables.

In an embodiment, before inputting the environmental characteristics at the current moment and operating parameter combinations of the air conditioner into the compensation temperature prediction model to predict the compensation temperatures of the operating parameter combinations at the next moment, the method further comprises:
collecting environmental and operating data within each time cycle;
traversing the environmental and operating data within each time cycle, and extracting compensation characteristics of a current time cycle and a compensation temperature of a next time cycle; and
training the compensation temperature prediction model through the compensation characteristics of the current time cycle as independent variables and the compensation temperature of the next time cycle as dependent variables.

In an embodiment, the step of determining the target operating parameter combination based on the perceived temperature and a target temperature at the current moment comprises:
calculating a temperature difference set between a target temperature at the current moment and the perceived temperature corresponding to each of the operating parameter combinations;
determining the target operating parameter combination based on the temperature difference set; and
controlling the operation of the air conditioner based on the target operating parameter combination.

In an embodiment, the step of determining the target operating parameter combination based on the temperature difference set comprises:
obtaining a target temperature difference threshold;
selecting a temperature difference subset less than or equal to the target temperature difference threshold from the temperature difference set; and
using the operating parameter combination corresponding to any temperature difference in the temperature difference subset as the target operating parameter combination

In an embodiment, the step of determining the target operating parameter combination based on the temperature difference set comprises:
obtaining a temperature difference with a smallest absolute value from the temperature difference set; and
using the operating parameter combination corresponding to the temperature difference as the target operating parameter combination.

Furthermore, to achieve the above purpose, the present application also provides a device for controlling the air conditioner, comprising:
a temperature prediction module configured to predict a compensation temperature of operating parameter combinations at a next moment based on environmental characteristics at a current moment and operating parameter combinations of an air conditioner;
a temperature determination module configured to determine a perceived temperature corresponding to each of the operating parameter combinations based on a return air temperature and the compensation temperature; and
an air conditioner control module configured to determine a target operating parameter combination based on a set temperature and the perceived temperature, and control an operation of the air conditioner based on the target operating parameter combination.

Furthermore, to achieve the above purpose, the present application also provides an air conditioner, comprising: a memory, a processor, and a program for controlling the air conditioner stored on the memory and executable on the processor, and the method for controlling the air conditioner is implemented when the program for controlling the air conditioner is executed by the processor.

Furthermore, to achieve the above purpose, the present application also provides a storage medium, wherein a program for controlling the air conditioner is stored on the storage medium, and the method for controlling the air conditioner is implemented when the program for controlling the air conditioner is executed by a processor.

The present application provides a method and a device for controlling an air conditioner, an air conditioner, and a storage medium. The method predicts the compensation temperature of operating parameter combinations at the next moment based the environmental characteristics at the current moment and operating parameter combinations of the air conditioner; determines the perceived temperature corresponding to each operating parameter combination based on the return air temperature and the compensation temperature; and determines the target operating parameter combination based on the set temperature and the perceived temperature, and controls the operation of the air conditioner based on the target operating parameter combination. The present application predicts the compensation temperature at the next moment through the environmental characteristics and operating parameter combinations of the air conditioner, calculates the perceived temperature at the next moment through the return air temperature and the compensation temperature, and then controls the operation of the air conditioner based on the temperature set by the user and the perceived temperature at the next moment. Thus, the air conditioner is controlled through the perceived temperature, enabling more accurate adjustment of the indoor temperature.

### BRIEF DESCRIPTION OF THE DRAWINGS

FIG. 1 is a schematic structural diagram of an air conditioner in a hardware operating environment involved in an embodiment of the present application.
FIG. 2 is a schematic flow chart of a method for controlling an air conditioner according to a first embodiment of the present application.
FIG. 3 is a schematic flow chart of the method for controlling the air conditioner according to a second embodiment of the present application.
FIG. 4 is a schematic flow chart of the method for controlling the air conditioner according to a third embodiment of the present application.
FIG. 5 is a structural block diagram of a device for controlling the air conditioner according to a first embodiment of the present application.

The realization of the objective, functional characteristics, and advantages of the present application are further described with reference to the accompanying drawings.

### DETAILED DESCRIPTION OF THE EMBODIMENTS

It should be understood that the specific embodiments described herein are merely for explaining the present application and are not intended to limit the present application.

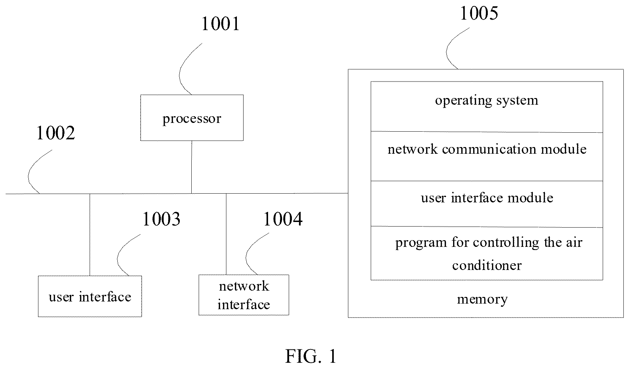

Referring to FIG. 1, FIG. 1 is a schematic structural diagram of an air conditioner in a hardware operating environment involved in an embodiment of the present application.

As shown in FIG. 1, the air conditioner may comprise: a processor 1001 (e.g., a central processing unit (CPU)), a communication bus 1002, a user interface 1003, a network interface 1004, and a memory 1005. The communication bus 1002 is configured implement connection and communication between these components. The user interface 1003 may comprise a display screen, and the user interface 1003 may also comprise a standard wired interface and a wireless interface; the wired interface of the user interface 1003 may be a USB interface in the present application. The network interface 1004 may comprise a standard wired interface and a wireless interface (e.g., a Wireless-Fidelity (Wi-Fi) interface). The memory 1005 may be a high-speed random access memory (RAM) or a stable nonvolatile memory (NVM), such as a disk memory. The memory 1005 may also be a storage apparatus independent of the aforementioned processor 1001.

Those skilled in the art can understand that the structure shown in FIG. 1 does not constitute a limitation on the air conditioner, and may comprise more or fewer components than shown, or combine certain components, or arrange different components.

As shown in FIG. 1, the memory 1005, which is regarded as a computer storage medium, may comprise an operating system, a network communication module, a user interface module, and a program for controlling the air conditioner.

In the air conditioner shown in FIG. 1, the network interface 1004 is mainly configured connect to a background server and perform data communication with the background server; the user interface 1003 is mainly configured connect to a user terminal; and the air conditioner controls the air conditioner to call the program for controlling the air conditioner stored in the memory 1005 by the processor 1001, and executes the method for controlling the air conditioner provided by the embodiment of the present application.

Based on the above hardware structure, embodiments of the method for controlling the air conditioner of the present application are provided.

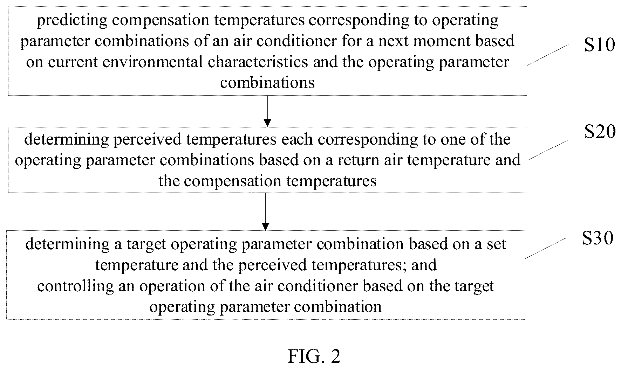

Referring to FIG. 2, FIG. 2 is a schematic flow chart of a method for controlling the air conditioner according to a first embodiment of the present application, and a first embodiment of the method for controlling the air conditioner of the present application is provided.

In the first embodiment, the method for controlling the air conditioner comprises the following steps:
Step S10, predicting compensation temperatures corresponding to operating parameter combinations of an air conditioner for a next moment based on current environmental characteristics and the operating parameter combinations.

It should be understood that the execution subject of this embodiment may be the air conditioner itself or a central controller of the air conditioner, where the central controller has functions such as data processing, data communication, and program operation. In an embodiment, the description is given with the central controller of the air conditioner as the execution subject.

It should be noted that the environmental characteristics at the current moment refer to environmental information in the current state when the air conditioner is operating normally. The environmental characteristics may comprise: outdoor temperature, indoor humidity, indoor return air temperature collected by the air conditioner, and other information. The operating parameter combinations of the air conditioner refer to possible combinations of operating parameters of the air conditioner at the next moment. The operating parameter combinations are related to the operating parameter combination at the current moment and the adjustment capability of the air conditioner. The stronger the adjustment capability of the air conditioner, the greater the number of corresponding operating parameter combinations at the next moment. For example, if the indoor fan speed at the current moment is sixty revolutions per minute, and the air conditioner can adjust by five revolutions within one cycle, the indoor fan speed at the next moment may be any value between fifty-five and sixty-five revolutions per minute. The operating parameter combinations may comprise parameters such as the frequency of the compressor in the air conditioner, the speed of the indoor fan, and the speed of the outdoor fan.

It should be understood that the compensation temperature refers to the temperature configured to compensate for the discrepancy between the return air temperature collected by the air conditioner and the perceived temperature when the return air temperature collected by the air conditioner is inaccurate. The compensation temperature is the difference between the return air temperature and the perceived temperature. The compensation temperature is usually related to the current operating environment of the air conditioner and the current operating conditions of the air conditioner, and the compensation temperature varies under different ambient temperatures and different operating conditions of the air conditioner. Therefore, to determine the compensation temperature, it is necessary to obtain the ambient temperature at the current moment and the specific operating parameters of the air conditioner in advance.

In an embodiment, the environmental characteristics in the environment where the air conditioner is located at the current moment and the operating parameter combination of the air conditioner at the current moment may be collected first, and possible operating parameter combinations of the air conditioner at the next moment are determined based on the operating parameter combination. The operating parameter combinations are selected one by one to predict the compensation temperature corresponding to the operating parameter combinations at the next moment together with the environmental characteristics at the current moment, thereby obtaining the compensation temperature corresponding to each operating parameter combination at the next moment.

Step S20, determining perceived temperatures each corresponding to one of the operating parameter combinations based on a return air temperature and the compensation temperatures.

It should be understood that the perceived temperature refers to the temperature felt by the user in the room. The perceived temperature may be the average room temperature or the ambient temperature around the user. Considering the user's comfort, the user's comfort is optimal when the perceived temperature is the user's set temperature.

In addition, as discussed above, the compensation temperature is the temperature configured compensate for the difference between the return air temperature and the indoor temperature. Therefore, when both the return air temperature and the compensation temperature are determined, the perceived temperature corresponding to each operating parameter combination at the next moment can be directly determined by calculating the return air temperature with the compensation temperature corresponding to each operating parameter combination one by one. In the process of determining the perceived temperature, the formula Tg = Th-Tb may be used; where Th is the return air temperature and Tb is the compensation temperature.

Step S30, determining a target operating parameter combination based on a set temperature and the perceived temperatures, and controlling an operation of the air conditioner based on the target operating parameter combination.

It should be understood that when the perceived temperature corresponding to each operating parameter combination at the next moment is determined, the most comfortable perceived temperature for the user at the next moment can be selected, and then the air conditioner can be controlled through the parameter combination corresponding to the perceived temperature, so that the perceived temperature can be adjusted to the most comfortable temperature among the perceived temperatures corresponding to operating parameter combinations at the next moment.

It should be noted that the set temperature refers to the temperature preset by the user on the air conditioner. The set temperature may be regarded as the user's target temperature or the most comfortable temperature. The target operating parameter combination refers to the operating parameter combination corresponding to the perceived temperature that significantly improves the user's comfort. For example, if the set temperature is 25.0 degrees Celsius, the first set of operating parameter combinations can reduce the temperature at the next moment to 26.1 degrees Celsius, and the second set of operating parameter combinations can reduce the temperature at the next moment to 26.0 degrees Celsius. At this time, relatively speaking, the perceived temperature of the second set of operating parameter combinations at the next moment is closer to the set temperature, and the improvement in user comfort is more obvious. At this time, the second set of operating parameter combinations is the target operating parameter combination.

In an embodiment, the user's set temperature may be obtained first, and the perceived temperature corresponding to each operating parameter combination at the next moment is compared with the set temperature. The target temperature is selected from the perceived temperatures at the next moment, and the operating parameter combination corresponding to the target temperature is used as the target operating parameter combination. The air conditioner is controlled to operate based on the target operating parameter combination, thereby significantly improving the user's comfort at the next moment.

The first embodiment provides a method for controlling the air conditioner. The method predicts the compensation temperature of operating parameter combinations at the next moment based on the environmental characteristics at the current moment and operating parameter combinations of the air conditioner; determines the perceived temperature corresponding to each operating parameter combination based on the return air temperature and the compensation temperature; and determines the target operating parameter combination based on the set temperature and the perceived temperature, and controls the operation of the air conditioner based on the target operating parameter combination. In an embodiment, the compensation temperature at the next moment is predicted through the environmental characteristics and operating parameter combinations of the air conditioner, the perceived temperature at the next moment is calculated through the return air temperature and the compensation temperature, and then the operation of the air conditioner is controlled based on the temperature set by the user and the perceived temperature at the next moment. Thus, the air conditioner is controlled through the perceived temperature, enabling more accurate adjustment of the indoor temperature.

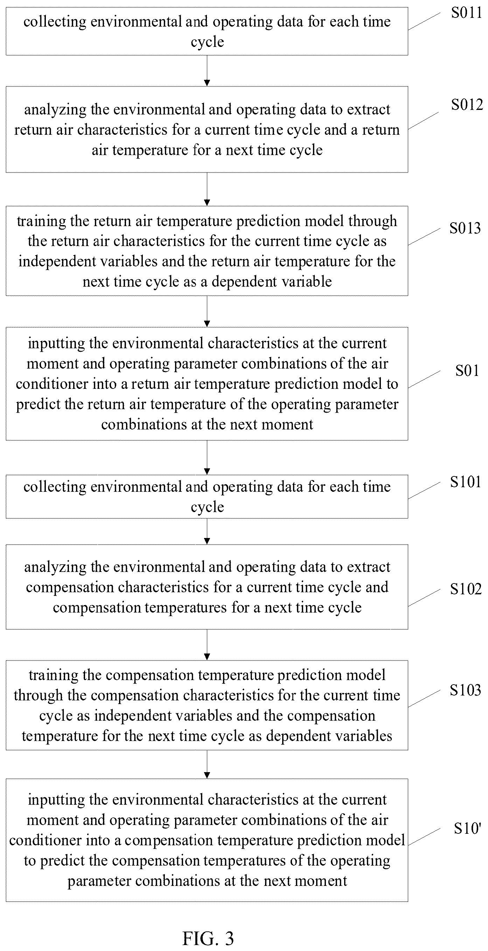

Referring to FIG. 3, FIG. 3 is a schematic flow chart of the method for controlling the air conditioner according to a second embodiment of the present application. Based on the first embodiment shown in FIG. 2 above, the second embodiment of the method for controlling the air conditioner of the present application is provided.

In the second embodiment, before step S10, the method further comprises:

Step S01, inputting the environmental characteristics at the current moment and operating parameter combinations of the air conditioner into a return air temperature prediction model to predict the return air temperature of the operating parameter combinations at the next moment.

It should be noted that in the process of determining the compensation temperature at the next moment, to more accurately determine the perceived temperature at the next moment, in an embodiment, the perceived temperature may be determined through the return air temperature at the next moment and the compensation temperature at the next moment. The return air temperature at the next moment may be predicted based on factors such as the return air temperature collected at the current moment, indoor temperature, indoor humidity, compressor frequency of the air conditioner, and speeds of the indoor and outdoor fans.

The return air temperature prediction model is a model configured to predict the return air temperature collected by the air conditioner at the next moment. The return air temperature prediction model can accurately predict the return air temperature at the next moment based on the environmental characteristics and the operating conditions of the air conditioner.

In an embodiment, possible operating parameter combinations of the air conditioner at the next moment may be combined with the environmental characteristics collected at the current moment one by one, and are input into the return air temperature prediction model to predict the return air temperature corresponding to each operating parameter combination at the next moment. Of course, the environmental characteristics may also be input into the return air temperature prediction model first, and then operating parameter combinations are input into the return air temperature prediction module one by one to predict the return air temperature corresponding to each operating parameter combination at the next moment.

Before step S01, the method further comprises:
Step S011, collecting environmental and operating data for each time cycle.

It can be understood that before predicting the return air temperature at the next moment through the return air temperature prediction model, an accurate return air temperature prediction model needs to be obtained. Usually, the model is mainly obtained through training. To ensure the accuracy of the output result of the return air temperature prediction model, in an embodiment, the environmental and operating data within each time cycle may be collected when the air conditioner is in operation.

The environmental and operating data comprises environmental information such as indoor temperature, outdoor temperature, return air temperature, and indoor humidity during the operation of the air conditioner, operating condition information of the air conditioner such as compressor frequency of the air conditioner and speeds of the indoor and outdoor fans, and operation data performed by the user. The environmental and operating data may be obtained through experiments or historical user home environments. The time cycle is a preset cycle for collecting environmental and operating data, and the time cycle may be set when the air conditioner is in a normal operating state. For example, the environmental and operating data of the air conditioner may be collected with a time cycle of thirty seconds or one minute.

Step S012, analyzing the environmental and operating data to extract return air characteristics for a current time cycle and a return air temperature for a next time cycle.

It can be understood that during the collection of environmental and operating data, the environmental and operating data within each cycle will be collected. The environmental and operating data collected in the current cycle and the return air temperature collected in the next cycle are the main data for training the model. The return air characteristics refer to the characteristics related to the prediction of return air temperature collected at the current time, such as indoor return air temperature, outdoor temperature, indoor humidity, compressor frequency, indoor fan speed, outdoor fan speed, and other characteristics.

In an embodiment, the environmental and operating data within each time cycle may be traversed, the return air characteristics at the current moment are extracted from the traversed environmental and operating data within the current time cycle, then the return air temperature collected within the next time cycle of the current time cycle is extracted, and then the return air characteristics within the current time cycle and the return air temperature collected within the next time cycle are used as a single sample.

Step S013, training the return air temperature prediction model through the return air characteristics for the current time cycle as independent variables and the return air temperature for the next time cycle as a dependent variable.

It should be understood that the return air characteristics are usually the independent variables input into the return air temperature prediction model, and the return air temperature is the dependent variable. When both the return air characteristics and the return air temperature are determined, the return air temperature prediction model may be trained through machine learning or deep learning algorithms with the return air characteristics of the current time cycle as independent variables and the return air temperature of the next time cycle as dependent variables.

In addition, after the model training is completed, to improve the accuracy of the return air temperature prediction model in predicting the next moment, the accuracy of the return air temperature prediction model may also be tested. If the accuracy of the return air temperature prediction model meets the requirements, the model training process is completed; otherwise, the model training process is repeated until the accuracy of the return air temperature prediction model meets the requirements.

Step S10', inputting the environmental characteristics at the current moment and operating parameter combinations of the air conditioner into a compensation temperature prediction model to predict the compensation temperatures of the operating parameter combinations at the next moment.

It should be noted that in the process of predicting the compensation temperature at the next moment, the compensation temperature of each operating parameter combination may also be determined by means of model prediction. The compensation temperature prediction model is a model configured predict the compensation temperature of the air conditioner at the next moment. The compensation temperature prediction model can accurately predict the compensation temperature at the next moment based on the environmental characteristics and the operating conditions of the air conditioner.

In an embodiment, possible operating parameter combinations of the air conditioner at the next moment may be combined with the environmental characteristics collected at the current moment one by one, and are input into the compensation temperature prediction model to predict the compensation temperature corresponding to each operating parameter combination at the next moment. Of course, the environmental characteristics may also be input into the compensation temperature prediction model first, and then operating parameter combinations are input into the compensation temperature prediction model one by one to predict the compensation temperature corresponding to each operating parameter combination at the next moment.

Before step S10', the method further comprises:
Step S101, collecting environmental and operating data for each time cycle.

It can be understood that similarly, before predicting the compensation temperature at the next moment through the compensation temperature prediction model, an accurate compensation temperature prediction model needs to be obtained. The process of collecting environmental and operating data within each time cycle may refer to the collection process in the return air temperature prediction model, which will not be repeated here.

Step S102: analyzing the environmental and operating data to extract compensation characteristics for a current time cycle and compensation temperatures for a next time cycle.

It should be noted here that the compensation characteristics refer to the characteristics related to temperature compensation in the environmental and operating data. The compensation characteristics overlap with the information comprised in the return air characteristics but are not completely the same. The compensation characteristics may be characteristics such as indoor fan speed, operating duration, indoor return air temperature, indoor perceived temperature, and outdoor temperature.

In the specific extraction process, the environmental and operating data within each time cycle may also be traversed, the compensation characteristics at the current moment are extracted from the traversed environmental and operating data within the current time cycle, then the compensation temperature collected within the next time cycle of the current time cycle is extracted, and then the compensation characteristics within the current time cycle and the compensation temperature collected within the next time cycle are used as a single sample.

Step S103, training the return air temperature prediction model through the compensation characteristics for the current time cycle as independent variables and the compensation temperature for the next time cycle as dependent variables.

It should be understood that the compensation characteristics are usually the independent variables input into the compensation temperature prediction model, and the compensation temperature is the dependent variable. When both the compensation characteristics and the compensation temperature are determined, the compensation temperature prediction model may be trained through machine learning or deep learning algorithms with the compensation characteristics of the current time cycle as independent variables and the compensation temperature of the next time cycle as dependent variables.

In addition, after the model training is completed, to improve the accuracy of the compensation temperature prediction model in predicting the next moment, the accuracy of the compensation temperature prediction model may also be tested. If the accuracy of the compensation temperature prediction model meets the requirements, the model training process is completed; otherwise, the model training process is repeated until the accuracy of the compensation temperature prediction model meets the requirements.

In the second embodiment, by accurately predicting the return air temperature and the compensation temperature at the next moment, the air conditioner can be effectively controlled using the possible compensation temperature at the next moment, realizing the process control of the air conditioner and more accurately meeting the user's comfort requirements.

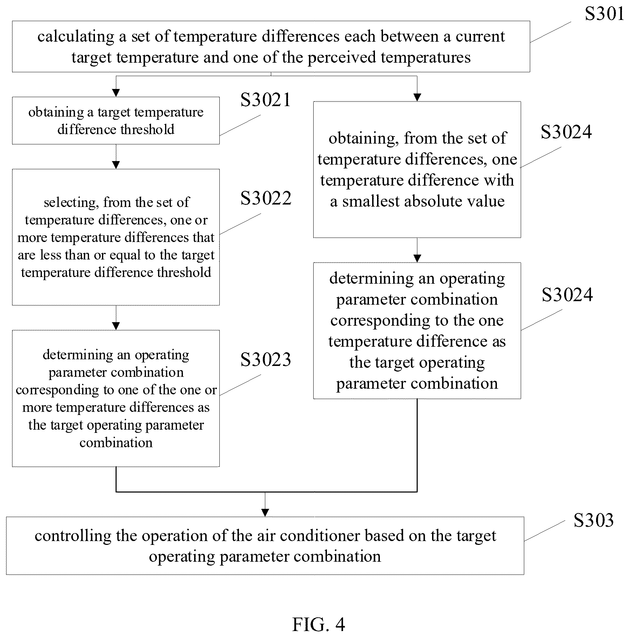

Referring to FIG. 4, FIG. 4 is a schematic flow chart of a third embodiment of the method for controlling the air conditioner of the present application. Based on the first embodiment or the second embodiment shown above, the third embodiment of the method for controlling the air conditioner of the present application is provided.

In the third embodiment, step S30 specifically comprises:
Step S301, calculating a set of temperature differences each between a current target temperature and the perceived temperature corresponding to each of the operating parameter combinations.

It can be understood that when the perceived temperature corresponding to each operating parameter combination at the next moment is determined, it is necessary to select an operating parameter combination that can meet the user's needs or further improve the user's comfort from operating parameters. In this process, the target temperature set by the user also needs to be determined. Considering that the user may adjust the temperature during the operation of the air conditioner, when obtaining the target temperature, the target temperature at the current moment shall prevail.

It should be noted that the temperature difference set refers to a set composed of temperature differences between the perceived temperature corresponding to each operating parameter combination and the target temperature. In the temperature difference set, each temperature difference represents a comfort state of the user at the next moment. The temperature difference set can be directly obtained by successively calculating the target temperature at the current moment with the perceived temperature corresponding to each operating parameter combination, for example, through the formula: perceived temperature Tg=Th-Tb, where Th is the return air temperature and Tb is the compensation temperature.

Step S302, determining the target operating parameter combination based on the set of temperature differences.

It can be understood that when the temperature difference set is determined, the operating parameter combination of the air conditioner from the current moment to the next moment can be determined based on each temperature difference in the temperature difference set. The smaller the temperature difference in the temperature difference set, the closer the user's perceived temperature will be to the set temperature at the next moment, and the more obvious the improvement in the user's comfort. Conversely, the larger the temperature difference, the greater the gap between the user's perceived temperature and the set temperature at the next moment, and the less obvious the improvement in the user's comfort.

Therefore, when the temperature difference set is determined, the target operating parameter combination can be selected based on the user's specific needs. For example, some users who need to reduce the indoor temperature as soon as possible can select the operating parameter combination corresponding to the perceived temperature with a very small temperature difference as the target operating parameter combination; while for users who expect a smaller variation in perceived temperature, the operating parameter combination corresponding to the perceived temperature with a relatively larger temperature difference can be selected as the target operating parameter combination.

Step S303, controlling the operation of the air conditioner based on the target operating parameter combination.

Step S302 comprises:
Step S3021, obtaining a target temperature difference threshold.

It should be noted that the target temperature difference threshold may be a temperature difference threshold preset by the user. The target temperature difference threshold is configured to reflect the user's requirement for the change range of the temperature adjusted by the air conditioner. The larger the target temperature difference threshold, the larger the range of adjustment of the indoor temperature or perceived temperature that the air conditioner needs to achieve within one adjustment cycle. For example, if the target temperature difference threshold is 0.1 degrees Celsius, the air conditioner needs to reduce or increase the indoor temperature by 0.1 degrees Celsius within one adjustment cycle.

Step S3022, selecting, from the set of temperature differences, one or more temperature differences that are less than or equal to the target temperature difference threshold.

It should be understood that the temperature difference subset is a set composed of temperature differences selected from the temperature difference set that are less than or equal to the target temperature difference threshold. A temperature difference less than or equal to the target temperature difference threshold indicates that the change in perceived temperature at the next moment can meet the user's requirements for comfort. All temperature differences meeting this requirement can meet the user's requirements for improving comfort. In the specific determination process, each temperature difference in the temperature difference set may be compared with the target temperature difference threshold one by one to obtain the temperature difference subset.

Step S3023, determining an operating parameter combination corresponding to one of the one or more temperature differences as the target operating parameter combination.

It should be understood that the operating parameter combination corresponding to each temperature difference in the temperature difference subset can meet the conditions set by the user. In this case, the operating parameter combination corresponding to any one of the temperature differences may be selected as the target operating parameter combination.

In addition, in an embodiment, step S302 may further comprise:

Step S3024, obtaining, from the set of temperature differences, one temperature difference with a smallest absolute value.

In addition, in an embodiment, the user may not have set a temperature difference threshold. In this case, priority may be given to the temperature difference with a relatively small absolute value in the temperature difference set. The smaller the absolute value, the closer the perceived temperature at the next moment is to the user's target temperature.

In the case where the temperature needs to be adjusted as soon as possible, in an embodiment, the temperature difference with the smallest absolute value in the temperature difference set is selected. The perceived temperature can be adjusted to the target temperature as close as possible at the next moment through this temperature difference, thereby maximizing the improvement of the user's comfort.

Step S3025, determining an operating parameter combination corresponding to the one temperature difference as the target operating parameter combination.

Therefore, when the temperature difference with the smallest absolute value is determined, the operating parameter combination corresponding to the temperature difference can be directly selected as the target operating parameter combination, and then the air conditioner is controlled to operate based on the target operating parameter combination to quickly adjust the indoor perceived temperature to the set temperature.

Furthermore, the present application also provides a storage medium, a program for controlling the air conditioner is stored on the storage medium, and steps of the aforementioned method for controlling the air conditioner is implemented when the program for controlling the air conditioner is executed by a processor.

Since the present storage medium can adopt the technical solutions of all the above embodiments, it at least has the beneficial effects brought by the technical solutions of the above embodiments, which will not be repeated here.

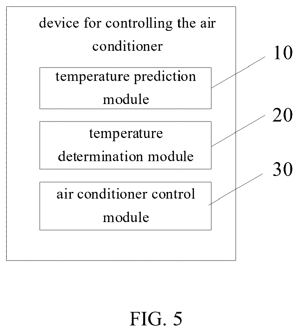

Furthermore, referring to FIG. 5, the present application also provides a device for controlling the air conditioner, comprising a temperature prediction module 10, a temperature determination module 20, and an air conditioner control module 30.

The temperature prediction module 10 is configured to predict the compensation temperature of operating parameter combinations at the next moment based on the environmental characteristics at the current moment and operating parameter combinations of the air conditioner.

The temperature determination module 20 is configured to determine the perceived temperature corresponding to each operating parameter combination based on the return air temperature and the compensation temperature.

The air conditioner control module 30 is configured to determine the target operating parameter combination based on the set temperature and the perceived temperature, and control the operation of the air conditioner based on the target operating parameter combination.

In an embodiment, the temperature prediction module 10 of the device for controlling the air conditioner predicts the compensation temperature of operating parameter combinations at the next moment based on the environmental characteristics at the current moment and operating parameter combinations of the air conditioner; the temperature determination module 20 determines the perceived temperature corresponding to each operating parameter combination based on the return air temperature and the compensation temperature; and the air conditioner control module 30 determines the target operating parameter combination based on the set temperature and the perceived temperature, and controls the operation of the air conditioner based on the target operating parameter combination. The present application predicts the compensation temperature at the next moment through the environmental characteristics and operating parameter combinations of the air conditioner, calculates the perceived temperature at the next moment using the return air temperature and the compensation temperature, and then controls the operation of the air conditioner based on the temperature set by the user and the perceived temperature at the next moment. Thus, the air conditioner is controlled through the perceived temperature, enabling more accurate adjustment of the indoor temperature.

For other embodiments or specific implementations of the device for controlling the air conditioner provided by the present application, reference may be made to the aforementioned method embodiments, so it at least has all the beneficial effects brought by the technical solutions of the above embodiments, which will not be repeated here.

It should be noted that in this document, the terms "comprise", "comprise" or any other variant thereof are intended to cover non-exclusive inclusion, so that a process, method, article or system comprising a series of elements not only comprises those elements but also comprises other elements not explicitly listed, or also comprises inherent elements of such process, method, article or system. Without more restrictions, an element defined by the phrase "comprising a..." does not exclude the existence of other identical elements in the process, method, article or system comprising the element.

The serial numbers of the embodiments of the present application are only for description and do not represent the advantages or disadvantages of the embodiments. In the claims enumerating several means, several of these means may be embodied by the same hardware item. The use of the words "first", "second", and "third" does not indicate any order, and these words may be interpreted as names.

Through the description of the above embodiments, those skilled in the art can clearly understand that the methods of the above embodiments can be implemented by means of software plus a necessary general hardware platform, and of course, can also be implemented by hardware, but in many cases, the former is a better implementation. Based on this understanding, the technical solution of the present application essentially or the part contributing to the related art may be embodied in the form of a software product, which is stored in a storage medium (such as a read only memory (ROM) image or random access memory (RAM), magnetic disk, optical disk) and comprises several instructions to enable a terminal device (which may be a mobile phone, a computer, a server, or a network device, etc.) to execute the methods described in each embodiment of the present application.

The above are only some embodiments of the present application and are not intended to limit the scope of the present application. Any equivalent structure or equivalent process transformation made using the description and drawings of the present application, or directly or indirectly applied in other related technical fields, is similarly comprised in the scope of the present application.

## Claims

1. A method for controlling an air conditioner, comprising:
predicting compensation temperatures corresponding to operating parameter combinations of an air conditioner for a next moment based on current environmental characteristics and the operating parameter combinations;
determining perceived temperatures each corresponding to one of the operating parameter combinations based on a return air temperature and the compensation temperatures;
determining a target operating parameter combination based on a set temperature and the perceived temperatures; and
controlling an operation of the air conditioner based on the target operating parameter combination.

2. The method for controlling the air conditioner according to claim 1, further comprising, before the predicting compensation temperatures corresponding to operating parameter combinations of the air conditioner for the next moment based on current environmental characteristics and the operating parameter combinations:
predicting return air temperatures corresponding to the operating parameter combinations for the next moment by inputting the current environmental characteristics and the operating parameter combinations into a return air temperature prediction model;
wherein the predicting compensation temperatures corresponding to operating parameter combinations of an air conditioner for the next moment based on current environmental characteristics and the operating parameter combinations comprises:
predicting the compensation temperatures for the next moment by inputting the current environmental characteristics and the operating parameter combinations into a compensation temperature prediction model.

3. The method for controlling the air conditioner according to claim 2, further comprising, before the predicting the compensation temperatures for the next moment using the compensation temperature prediction model based on the current environmental characteristics and the operating parameter combinations:
collecting environmental and operating data for each time cycle;
traversing the environmental and operating data for each time cycle to extract return air characteristics for a current time cycle and a return air temperature for a next time cycle; and
training the return air temperature prediction model through the return air characteristics for the current time cycle as independent variables and the return air temperature for the next time cycle as a dependent variable.

4. The method for controlling the air conditioner according to claim 2, further comprising, before the predicting the compensation temperatures for the next moment using the compensation temperature prediction model based on the current environmental characteristics and the operating parameter combinations:
collecting environmental and operating data for each time cycle;
traversing the environmental and operating data for each time cycle to extract compensation characteristics for a current time cycle and compensation temperatures for a next time cycle; and
training the compensation temperature prediction model through the compensation characteristics for the current time cycle as independent variables and the compensation characteristics temperatures for the next time cycle as dependent variables.

5. The method for controlling the air conditioner according to any one of claims 1 to 4, wherein the determining the target operating parameter combination based on a current target temperature and the perceived temperatures comprises:
calculating a set of temperature differences each between a current target temperature and one of the perceived temperatures each corresponding to one of the operating parameter combinations; and
determining the target operating parameter combination based on the set of temperature differences.
controlling the operation of the air conditioner based on the target operating parameter combination.

6. The method for controlling the air conditioner according to claim 5, wherein the determining the target operating parameter combination based on the set of temperature differences comprises:
obtaining a target temperature difference threshold;
selecting, from the set of temperature differences, one or more temperature differences that are less than or equal to the target temperature difference threshold as a subset; and
determining an operating parameter combination corresponding to one of the temperature differences in the subset as the target operating parameter combination.

7. The method for controlling the air conditioner according to claim 5, wherein the determining the target operating parameter combination based on the set of temperature differences comprises:
obtaining, from the set of temperature differences, one temperature difference with a smallest absolute value; and
determining an operating parameter combination corresponding to the one temperature difference as the target operating parameter combination.

8. A device for controlling an air conditioner, comprising:
a temperature prediction module configured to predict compensation temperatures corresponding to operating parameter combinations of the air conditioner for a next moment based on current environmental characteristics and the operating parameter combinations;
a temperature determination module configured to determine perceived temperatures each corresponding to one of the operating parameter combinations based on a return air temperature and the compensation temperatures; and
an air conditioner control module configured to determine a target operating parameter combination based on a set temperature and the perceived temperatures; and control an operation of the air conditioner based on the target operating parameter combination.

9. An air conditioner, comprising: a memory, a processor, and a program for controlling the air conditioner stored on the memory and executable on the processor, wherein the method for controlling the air conditioner according to any one of claims 1 to 7 is implemented when the program for controlling the air conditioner is executed by the processor.

10. A storage medium, a program for controlling an air conditioner is stored on the storage medium, wherein the method for controlling the air conditioner according to any one of claims 1 to 7 is implemented when the program for controlling the air conditioner is executed by a processor.
